Europäisches Patentamt

(19) European Patent Office

Office européen des brevets

(11) **EP 1 324 319 A1**

(12) **DEMANDE DE BREVET EUROPEEN**

(43) Date de publication:
**02.07.2003 Bulletin 2003/27**

(51) Int Cl.⁷: **G11B 7/00**, G11B 7/125

(21) Numéro de dépôt: **02080145.2**

(22) Date de dépôt: **10.12.2002**

(84) Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30) Priorité: **11.12.2001 FR 0115978**

(71) Demandeur: **Koninklijke Philips Electronics N.V.**
**5621 BA Eindhoven (NL)**

(72) Inventeurs:
• **Looijkens, M.A.H.**
  **75008 Paris (FR)**
• **McCormack, J.J.A.**
  **75008 Paris (FR)**

(74) Mandataire: **Chaffraix, Jean**
**Société Civile S.P.I.D.**
**156, Boulevard Haussmann**
**75008 Paris (FR)**

(54) **Appareil comportant un dispositif d'enregistrement d'informations dans un milieu d'enregistrement et procédé mis en oeuvre dans un tel appareil**

(57)   Cet appareil (1) comporte notamment un dispositif d'enregistrement (3) pour enregistrer des informations disponibles à une borne (5). Comme les disques optiques présentent des caractéristiques d'enregistrement, les impulsions d'enregistrement représentant l'information à emmagasiner ont des allures différentes. On met alors ces différentes impulsions dans une mémoire vive (30) alimentée par une base de données (35).

FIG.1

**Description**

L'invention concerne un appareil formé d'un dispositif d'enregistrement d'informations dans un milieu d'enregistrement, notamment un disque optique, comportant un générateur de signaux d'enregistrement présentant certaines caractéristiques relatives audit milieu d'enregistrement.

L'invention concerne aussi un procédé mis en oeuvre dans un tel appareil.

Un tel appareil est décrit dans le document de brevet américain US 6 285 647 déposé au nom de la demanderesse. Dans ce document, on propose d'élaborer des séquences d'impulsions bien calibrées pour effectuer les enregistrements. Cependant, cet appareil connu ne propose pas de changer ces impulsions calibrées en fonction de la nature du milieu d'enregistrement.

La présente invention propose un appareil du genre mentionné dans le préambule qui a pour but d'améliorer l'appareil de l'art antérieur pour lui donner une grande aptitude à s'adapter aux différents milieux d'enregistrement.

Pour cela, un tel appareil est remarquable en ce que les caractéristiques de ces signaux d'enregistrements sont contenues dans une première mémoire vive pour laquelle est prévu un générateur de codes d'adresses.

Une caractéristique importante de l'invention selon laquelle l'organe de mémoire est du type mémoire vive (mémoire RAM) permet de s'adapter à tous les milieux d'enregistrement.

Un procédé mis en oeuvre dans un tel appareil est remarquable en ce qu'il comporte les étapes suivantes :

- emmagasinage des définitions d'impulsion d'enregistrement, dans un organe de mémoire,
- détermination de la nature du milieu d'enregistrement,
- prélèvement de la définition d'impulsion en fonction de la nature du milieu d'enregistrement détecté,
- enregistrement des informations dans le milieu selon ladite définition détectée.

La description suivante, faite en regard des dessins ci-annexés, le tout donné à titre d'exemples non limitatifs fera bien comprendre comment l'invention peut être réalisée. Sur les dessins :

La figure 1 montre un schéma de l'appareil conforme à l'invention.
La figure 2 montre l'allure de signaux d'enregistrement pour différents milieux.
La figure 3 montre les signaux d'horloge Hrlc en corrélation avec un symbole.
La figure 4 est un schéma pour l'explication de la mise en mémoire d'un signal d'enregistrement.

La figure 5 montre un premier schéma d'un décodeur.
La figure 6 montre un autre schéma d'un décodeur.
La figure 7 montre une première partie d'une table de décodage d'adresses utilisée dans ledit décodeur.
La figure 8 montre une deuxième partie de la table de décodage.

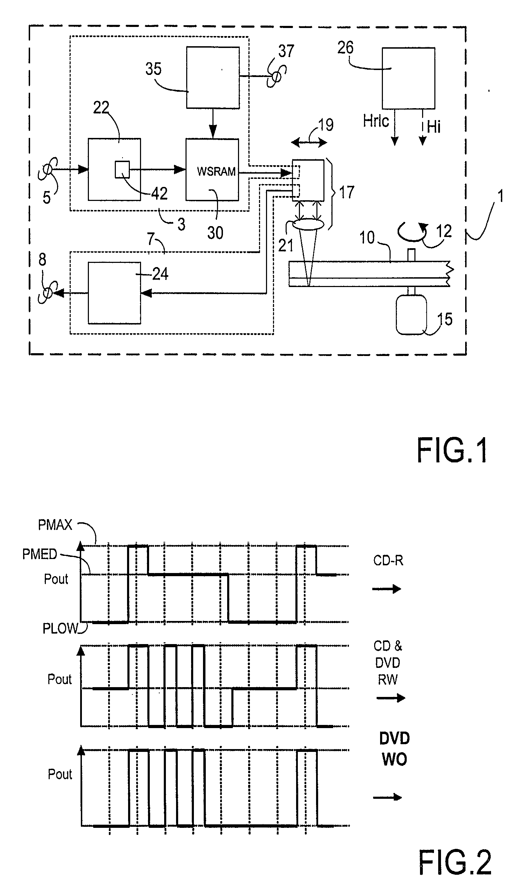

A la figure 1, on a représenté un appareil 1 comportant un dispositif d'enregistrement 3, conforme à l'invention pour enregistrer des informations appliquées à la borne 5 et éventuellement un dispositif de restitution d'informations 7 pour restituer des informations sur une borne 8. La référence 10 indique le disque qui constitue dans cet exemple le milieu d'enregistrement. C'est sur ce disque qu'on se propose d'enregistrer des informations et c'est à partir de celui-ci qu'il sera possible de prélever des informations pour les restituer à la borne 8. Ce disque tourne dans un sens indiqué par la flèche 12, entraîné par un moteur 15. Une tête de lecture/écriture 17 se déplaçant dans une direction radiale par rapport au disque 10 permet d'explorer tout le disque. Ceci est représenté par la flèche 19. Cette tête comporte au moins un système à diode laser pour l'écriture et/ou la lecture. Le faisceau de lecture et/ou d'écriture est focalisé au moyen d'un objectif 21 sur une couche du disque 10.

La figure 2 montre l'allure de la puissance "Pout" du faisceau laser qui doit irradier le disque pour enregistrer un élément binaire. Cette puissance présente des intensités variables en fonction du milieu sur lequel on enregistre. Sur cette figure 2, on a montré quelques cas : celui des impulsions de gravure pour un CD-R qui est un disque optique à lecture seule, une fois qu'il a été gravé. Un autre cas est celui des disques reenregistrables (CD & DVD RW). Et enfin le disque DVD enregistrable une seule fois (DVD WO). Ces impulsions de gravure peuvent avoir trois niveaux PMAX, PMED et PLOW. L'information à graver est préalablement traitée par un circuit d'interface de gravure 22 (figure 1) sur lequel la borne 5 est branchée. De façon similaire, un circuit d'interface de sortie 24 recueille les informations de la tête laser 17 afin de les restituer sur la borne 8 sous une forme convenant à l'utilisateur. Une horloge 26 fixe les différents rythmes Hi,...Hrlc nécessaires au fonctionnement de l'appareil.

Pour s'adapter à ces différentes configurations d'impulsion, l'invention propose d' enregistrer dans une mémoire 30 différents paramètres qui définissent ces impulsions d'enregistrement. La mémoire 30 ne contient ces configurations que pour le milieu d'enregistrement qui se trouve dans l'appareil. Les différentes configurations possibles sont contenues dans une base de données disposée dans une mémoire 35. Cette base de données peut même être située en dehors de l'appareil. Le choix de la configuration à enregistrer dans la mémoire 30 est déterminé par une information de choix appliquée à une borne 37.

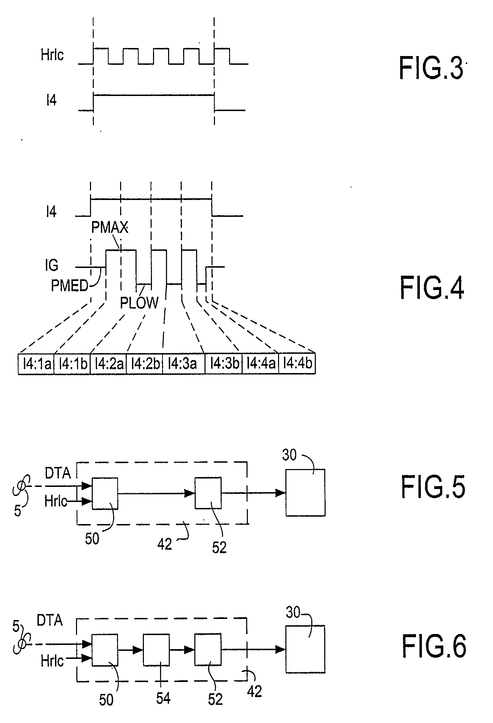

La figure 3 et les suivantes montrent comment les impulsions de gravure sont enregistrées dans les différentes mémoires 30 et 35 et notamment dans la mémoire 30. Les informations sont codées au moyen d'un code RLC (connu sous le nom de Runlength limited code). Ces codes ont différentes longueurs, ceci est détecté au niveau du circuit d'interface 22. Ces longueurs vont de 1 à 15 périodes d'horloge Hrlc. Ces symboles portent alors les dénominations I1 à I15. Sur la figure 3, le symbole I4 a donc une durée égale à quatre périodes du signal d'horloge. Selon la nature du disque à graver, à ce symbole on fait correspondre une impulsion de gravure IG montrée à la figure 4. Les niveaux de cette impulsion présentent des paliers PMAX, PMED et PLOW comme cela a déjà été dit. Ces paliers ont des durées variables. Pour pouvoir mémoriser cette impulsion de gravure on affecte un mot binaire pour définir l'amplitude de l'impulsion et pour définir la durée. Ceci est représenté par 14:1a I4:1b I4:2a I4:2b I4:3a ... I4:4b à la figure 4. Pour déterminer les symboles, on utilise un décodeur qualifié de décodeur RLC portant la référence 42 à la figure 1 et faisant partie du dispositif d'enregistrement 3. C'est à partir de ce décodeur 42 que les adresses pour la mémoire 30 sont élaborées.

Cette façon de coder donne le nombre d'entrées Nb nécessaires pour la mémoire 30.

$$Nb = \sum_{i=1}^{N} i = \frac{N(N+1)}{2}$$

Pour emmagasiner les symboles I1 à I15, on obtient Nb = 120.

Cependant les formes d'impulsions de gravure dépendent aussi des impulsions de gravure précédentes.

La figure 5 montre un exemple de réalisation d'un premier décodeur RLC pour des signaux DTA. Ce décodeur tient compte des impulsions précédentes. Il se compose d'un détecteur de longueur de symboles 50 et d'un générateur de codes d'adresses 52. Selon cet exemple pour un média donné la mémoire 30 doit avoir un adressage correspondant à 3600 adresses pour des mots de "n" éléments binaires. Cet adressage peut être décompté de la manière suivante. En partant de Nb = 120, à chacun de ces emplacements peuvent être adjointes 15 impulsions d'espace ou 120 impulsions de mark. Les impulsions d'espace et de mark correspondent respectivement aux valeurs binaires "0" et "1". On parle aussi de land et de pit.

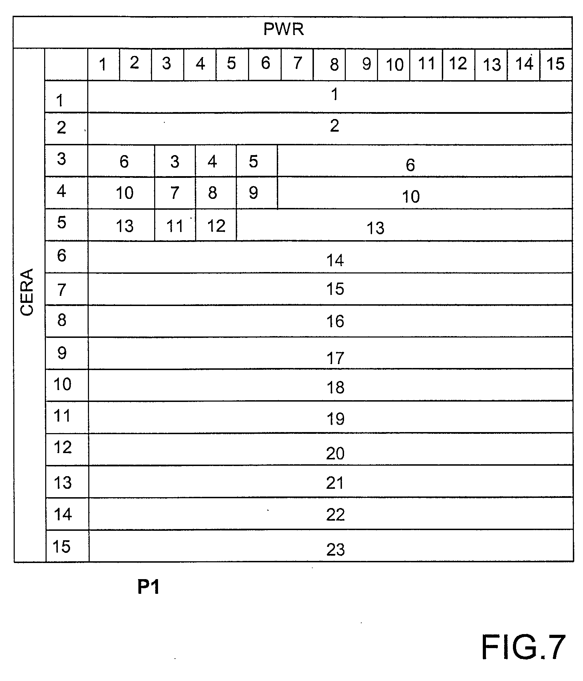

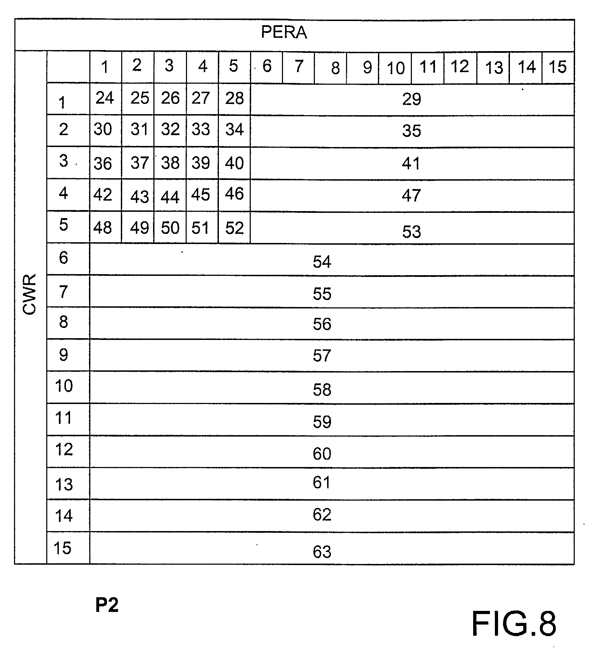

La figure 6 montre un deuxième exemple de réalisation d'un décodeur RLC. Les éléments communs avec ceux des figures précédentes portent les même références. Ce deuxième exemple comporte une table de décodage 54 disposée entre le détecteur de longueur de symbole 50 et le générateur de codes d'adresses 52. Ce deuxième exemple est basé sur l'hypothèse que toutes les combinaisons ne requièrent pas une entrée dans la mémoire 30. En effet, il y a 450 combinaisons possibles pour toutes les possibilités ancienne impulsion/impulsion courante c'est-à-dire que l'on considère 225 (15 x 15) possibilités entre une impulsion d'espace et une impulsion de mark. Il faut bien souligner qu'une impulsion de mark est toujours suivie d'une impulsion d'espace et vice-versa. Ce nombre de 450 peut être réduit pratiquement à 246. Les figure 7 et 8 montrent comment peut être organisée la table de décodage 54. La figure 7 montre une partie P1 de la table concernant une impulsion d'effacement PWR, suivant une impulsion d'écriture CERA, tandis que la figure 8 montre l'autre partie de la table P2, concernant les impulsions d'écriture CWR, suivant une impulsion d'effacement PERA. Ainsi, cette table transforme les 450 combinaisons possibles en 63 valeurs de sorties. Le convertisseur d'adresses 52 a à fournir les adresses pour la mémoire 30. De ces tables on établit les adresses à engendrer par le générateur de codes d'adresses 52. En ce qui concerne la partie de table P1, le nombre d'entrées Nb1 pour la table 30 est donné par :

$$Nb1 = \frac{N(N+1)}{2} + (E3.3) + (E4.4) + (E5.2)$$

Ce qui donne avec E3=3, E4=4 et E5=5 :

$$Nb1 = 151$$

En ce qui concerne la partie P2, le nombre d'entrées Nb2 devient :

$$Nb2 = \frac{N(N+1)}{2} + 5\sum_{i=1}^{M} i$$

Ce qui donne avec N=15 et M=5

$$Nb2 = 195$$

D'où le nombre total Nb d'entrées à prévoir sur la mémoire 30 :

$$Nb = 246$$

L'engendrement des adresses pour la mémoire 20 n'est pas direct, pour cela et d'une manière avantageuse le générateur de codes d'adresses 52 est réalisé au moyen d'une mémoire RAM. Ceci permet une implémentation facile et d'autre part la possibilité de définir des stratégies qui nécessitent un nombre limité d'entrées de cette table. Ce générateur réalisé au moyen d'une mémoire RAM contient des pointeurs pour la mémoire 30. Ainsi, on a une certaine flexibilité pour les informations inscrites dans la mémoire 30.

- Par exemple on peut définir une stratégie minimum ne tenant pas compte des symboles RLC précédents. Dans le cadre de l'exemple décrit 120 emplacements suffisent auxquels on ajoute un emplacement pour l'impulsion d'effacement.
- Une autre stratégie peut être une stratégie maximaliste. Ainsi tous les éléments des tables de décodage DLC peuvent utiliser une entrée dans la mémoire 30. Ce qui nécessite donc 246 entrées de mémoire.

Selon un autre mode de réalisation, il est possible de ne plus utiliser de table de décodage 54. On élabore alors un organe de décodage 52 à partir d'une mémoire vive (mémoire RAM). Si on veut respecter toutes les combinaisons possibles des symboles I1 à I15, il faut prévoir une mémoire qui fournit 450 adresses : 225 pour les impulsions d'écriture suivant les impulsions d'effacement, et 225 pour les impulsions d'effacement suivant les impulsions d'écriture. Ces nombres sont donnés dans le cadre de l'exemple décrit.

**Revendications**

1. Appareil formé d'un dispositif d'enregistrement d'informations dans un milieu d'enregistrement, notamment un disque optique, comportant un générateur de signaux d'enregistrement présentant certaines caractéristiques relatives audit milieu d'enregistrement **caractérisé en ce que** les caractéristiques de ces signaux d'enregistrements sont contenues dans une première mémoire vive pour laquelle est prévu un générateur de codes d'adresses.

2. Appareil selon la revendication 1 **caractérisé en ce qu'**il est prévu une base de données à partir de laquelle ladite première mémoire vive est chargée en vue de s'adapter audit milieu d'enregistrement.

3. Appareil selon la revendication 1 ou 2 **caractérisé en ce que** ledit générateur de codes d'adresses tient compte du signal d'enregistrement précédent pour adresser la première mémoire vive en vue de fournir l'impulsion courante d'enregistrement.

4. Appareil selon l'une des revendications 1 à 3 **caractérisé en ce que** ledit générateur comporte une deuxième mémoire vive pour contenir une table d'adressage.

5. Appareil selon l'une des revendications 1 à 4 **caractérisé en ce qu'**il comporte en outre un dispositif de lecture dudit milieu d'enregistrement.

6. Procédé d'enregistrement mis en oeuvre dans un appareil selon l'une des revendications 1 à 5 **caractérisé en ce qu'**il comporte les étapes suivantes :

- emmagasinage des définitions d'impulsion d'enregistrement, dans un organe de mémoire,
- détermination de la nature du milieu d'enregistrement,
- prélèvement de la définition d'impulsions en fonction de la nature du milieu d'enregistrement détecté,
- enregistrement des informations dans le milieu selon ladite définition détectée.

# FIG.1

# FIG.2

FIG.3

FIG.4

FIG.5

FIG.6

| CERA \ PWR | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| 1 | 1 | | | | | | | | | | | | | | |
| 2 | 2 | | | | | | | | | | | | | | |
| 3 | 6 | | 3 | 4 | 5 | 6 | | | | | | | | | |
| 4 | 10 | | 7 | 8 | 9 | 10 | | | | | | | | | |
| 5 | 13 | | 11 | 12 | 13 | | | | | | | | | | |
| 6 | 14 | | | | | | | | | | | | | | |
| 7 | 15 | | | | | | | | | | | | | | |
| 8 | 16 | | | | | | | | | | | | | | |
| 9 | 17 | | | | | | | | | | | | | | |
| 10 | 18 | | | | | | | | | | | | | | |
| 11 | 19 | | | | | | | | | | | | | | |
| 12 | 20 | | | | | | | | | | | | | | |
| 13 | 21 | | | | | | | | | | | | | | |
| 14 | 22 | | | | | | | | | | | | | | |
| 15 | 23 | | | | | | | | | | | | | | |

**P1**

**FIG.7**

7

| | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| PERA | | | | | | | | | | | | | | | | |
| | 1 | 24 | 25 | 26 | 27 | 28 | 29 | | | | | | | | | |
| | 2 | 30 | 31 | 32 | 33 | 34 | 35 | | | | | | | | | |
| | 3 | 36 | 37 | 38 | 39 | 40 | 41 | | | | | | | | | |
| | 4 | 42 | 43 | 44 | 45 | 46 | 47 | | | | | | | | | |
| | 5 | 48 | 49 | 50 | 51 | 52 | 53 | | | | | | | | | |
| CWR | 6 | 54 | | | | | | | | | | | | | | |
| | 7 | 55 | | | | | | | | | | | | | | |
| | 8 | 56 | | | | | | | | | | | | | | |
| | 9 | 57 | | | | | | | | | | | | | | |
| | 10 | 58 | | | | | | | | | | | | | | |
| | 11 | 59 | | | | | | | | | | | | | | |
| | 12 | 60 | | | | | | | | | | | | | | |
| | 13 | 61 | | | | | | | | | | | | | | |
| | 14 | 62 | | | | | | | | | | | | | | |
| | 15 | 63 | | | | | | | | | | | | | | |

**P2**

# FIG.8

**Office européen des brevets**

**RAPPORT DE RECHERCHE EUROPEENNE**

Numéro de la demande
EP 02 08 0145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 058 240 A (SAMSUNG ELECTRONICS CO LTD) 6 décembre 2000 (2000-12-06) * le document en entier * --- | 1-6 | G11B7/00 G11B7/125 |
| X | US 5 802 031 A (CLARK ALAN ROBERT ET AL) 1 septembre 1998 (1998-09-01) * le document en entier * --- | 1-6 | |
| X | EP 0 288 114 A (PHILIPS & DU PONT OPTICAL ;PHILIPS NV (NL)) 26 octobre 1988 (1988-10-26) * colonne 3, ligne 35 - ligne 57 * * colonne 9, ligne 53 - colonne 12, ligne 20; figure 8 * --- | 1-6 | |
| X | EP 0 978 827 A (HITACHI LTD) 9 février 2000 (2000-02-09) * alinéa [0008] - alinéa [0011] * * alinéa [0065] - alinéa [0066] * ----- | 1-6 | |

**DOMAINES TECHNIQUES RECHERCHES (Int.Cl.7)**

G11B

*Le présent rapport a été établi pour toutes les revendications*

| Lieu de la recherche | Date d'achèvement de la recherche | Examinateur |
|---|---|---|
| LA HAYE | 19 mars 2003 | Annibal, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 02 08 0145

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

19-03-2003

| Document brevet cité au rapport de recherche | | Date de publication | Membre(s) de la famille de brevet(s) | | Date de publication |
|---|---|---|---|---|---|
| EP 1058240 | A | 06-12-2000 | KR | 2001001339 A | 05-01-2001 |
| | | | CN | 1276597 A | 13-12-2000 |
| | | | EP | 1058240 A2 | 06-12-2000 |
| | | | JP | 2000348349 A | 15-12-2000 |
| US 5802031 | A | 01-09-1998 | JP | 10241165 A | 11-09-1998 |
| EP 0288114 | A | 26-10-1988 | NL | 8800223 A | 16-11-1988 |
| | | | AT | 85720 T | 15-02-1993 |
| | | | AU | 629792 B2 | 15-10-1992 |
| | | | AU | 1503788 A | 27-10-1988 |
| | | | BR | 8801854 A | 22-11-1988 |
| | | | CA | 1305253 A1 | 14-07-1992 |
| | | | CN | 88102870 A ,B | 02-11-1988 |
| | | | DD | 281279 A5 | 01-08-1990 |
| | | | DD | 284775 A5 | 21-11-1990 |
| | | | DE | 3878293 D1 | 25-03-1993 |
| | | | DE | 3878293 T2 | 05-08-1993 |
| | | | EP | 0288114 A1 | 26-10-1988 |
| | | | ES | 2039588 T3 | 01-10-1993 |
| | | | HK | 87794 A | 02-09-1994 |
| | | | JP | 10326437 A | 08-12-1998 |
| | | | JP | 1033726 A | 03-02-1989 |
| | | | JP | 2934634 B2 | 16-08-1999 |
| | | | SG | 100794 G | 16-06-1995 |
| | | | RU | 2024074 C1 | 30-11-1994 |
| | | | US | 5001692 A | 19-03-1991 |
| EP 0978827 | A | 09-02-2000 | CN | 1244003 A | 09-02-2000 |
| | | | EP | 0978827 A2 | 09-02-2000 |
| | | | JP | 2000149265 A | 30-05-2000 |
| | | | KR | 2000017004 A | 25-03-2000 |
| | | | TW | 468177 B | 11-12-2001 |
| | | | US | 2002067669 A1 | 06-06-2002 |
| | | | US | 6160784 A | 12-12-2000 |

EPO FORM P0460

Pour tout renseignement concernant cette annexe : voir Journal Officiel de l'Office européen des brevets, No.12/82